# EUROPEAN PATENT SPECIFICATION

(11) **EP 4 494 461 B1**
(45) Date of publication and mention of the grant of the patent: **28.01.2026**
(21) Application number: 24186152.5
(22) Date of filing: 03.07.2024
(51) Int. Cl.: A01K 1/03, A01K 5/02, A01K 61/80

(54) **DISPENSER, FEEDER AND SYSTEM FOR DISPENSING FEED**
SPENDER, ZUFÜHRER UND SYSTEM ZUR AUSGABE VON FUTTER
DISTRIBUTEUR, ALIMENTATION ET SYSTÈME DE DISTRIBUTION DE PRODUIT ALIMENTAIRE

(30) Priority: 06.07.2023 IT 202300014097
(43) Date of publication of application: 22.01.2025
(73) Proprietor: Tecniplast S.p.A., 21020 Buguggiate (IT)
(72) Inventor: MALNATI, Giovanni, 21046 Malnate (IT); BROCCA, Marco Giovanni Antonio, 21049 Tradate (IT); FRANGELLI, Giovanni, 21049 CARONNO VARESINO (IT)
(74) Representative: Pizzoli, Antonio Mario

(56) References cited:
- WO-A1-2023/064428
- CN-A- 109 997 710
- CN-A- 114 642 177
- GB-A- 1 562 486
- KR-B1- 100 620 535
- RU-C1- 2 676 552
- US-B2- 8 499 719

## Description

### Technical field

The present description concerns a dispenser for dispensing feed, in particular to laboratory animals housed in laboratory containers, such as cages or tanks. The present description also concens a feeder and a system which can comprise said dispenser.

### Background of the description

US 8499719 describes a system for dispensing feed, wherein a mobile feeder can tip a dispenser containing feed around a horizontal axis from a horizontal position of the dispenser to an inclined position, so as to cause an amount of feed to fall by gravity into a container for animals. The amount of feed dispensed by the feeder with one rotation of the dispenser is determined by the speed of tipping of the dispenser and the feed contained in the dispenser cannot be completely emptied due to the structure of the dispenser and its arrangement in the feeder.

WO 2023/064428 A1 describes a similar system, wherein the mobile feeder rotates a dispenser around its longitudinal axis, which is arranged horizontally, so that an amount of feed is dispensed from a side opening of the dispenser due to the rotation of the dispenser. The dispensing precision is relatively low as it is difficult to dose the amount of feed that is dispensed from the side opening.

KR 100620535 B1 describes a feeder for dispensing feed, which comprises a feed dispenser and an actuator mechanically coupled with a rotor of the dispenser that is provided with an auger for dispensing feed through an outlet opening. Said dispenser and in particular its outlet opening are arranged above the actuator, so this known feeder cannot be easily used in a system for dispensing feed such as those described in US 8449719 and WO 2023/064428 A1. Furthermore, the dispenser cannot be quickly and easily coupled or uncoupled with/from said known feeder, for example to replace the dispenser with another dispenser containing a different feed, due to screws that are used as coupling means.

RU 2676552 C1 and GB 1562486 A describe feeders comprising a feed dispenser which is stably fixed in the relevant feeder, so that also in these known feeders it is impossible or in any case difficult to replace a dispenser with another dispenser.

CN 109997710 A discloses a dispenser/feeder according to the preamble of claims 1 and 8 and CN 114642177 A discloses another known dispenser/feeder.

### Summary of the description

The object of the present description is therefore to provide a system that solves these problems. This object is achieved with a dispenser, a feeder and a system, the main features of which are specified in the attached claims, to be considered an integral part of the present description. The invention is set out in said attached claims.

Thanks to the particular features of the dispenser and/or feeder, the system according to the present description allows feed to be dispensed in a more precise, faster and cleaner manner than known systems, as the dispensing of the feed does not require the movement of the entire dispenser.

The dispenser preferably comprises a particular auger, a particular rotor and/or a particular hopper, the features of which further improve the dispenser's precision of dispensing and its complete emptying.

The dispenser can be manufactured, applied, removed and cleaned relatively quickly and easily, thus reducing cost, maintenance and operating time of the system. For this purpose, the dispenser and a dispenser holder of the feeder comprise reversible coupling means, such as for example a lid and a plate provided with magnets and other mechanical devices suitable to facilitate the application and removal of the dispenser from the dispenser holder.

The feeder preferably comprises particular devices, such as a movable support provided with one or more electric strikers and/or bidirectional electric stepper motors, which reduce dispensing times and prevent feed from accidentally falling from the dispenser and dirtying the surrounding environment.

The relatively tidy and compact structure of the feeder also allows two dispensers to be applied to the feeder, instead of just one, thus improving the efficiency and versatility of the system.

Therefore, thanks to the particular combination of features of the dispenser and the feeder, the system according to the present description is more reliable and more efficient than the known systems.

The system may also comprise particular devices to improve the safety of the movement of the feeder and the conservation of the feed contained in the dispenser.

### Brief description of the drawings

Further advantages and features of the dispenser, the feeder and the system according to the present description will be evident to those skilled in the art from the following detailed description of some embodiments, to be considered non-limiting examples of the claims, with reference to the attached drawings in which:
- figure 1 is an exploded view of one embodiment of the dispenser;
- figure 2 is a rear view of the dispenser of figure 1;
- figure 3 is the (partial) section III-III of figure 2;
- figure 4 is a perspective view of the dispenser of figure 1;
- figure 5 is a perspective view of the dispenser of figure 1 with the respective dispenser holder;
- figure 6 is a side view of the dispenser of figure 5;
- figure 7 is section VII-VII of figure 6;
- figure 8 is a perspective view from above of one embodiment of the feeder;
- figure 9 is a perspective view from below of the feeder of figure 8;
- figure 10 is a rear view of the feeder of figure 8;
- figure 11 is a front view of the feeder of figure 8;
- figure 12 is a bottom view of the feeder of figure 8;
- figure 13 is a side view of the feeder of figure 8;
- figure 14 is a side view of the feeder of figure 8 in a retracted position;
- figure 15 is section XV-XV of figure 13;
- figure 16 is section XVI-XVI of figure 13;
- figure 17 is a front view of an embodiment of the system.

### Exemplary embodiments

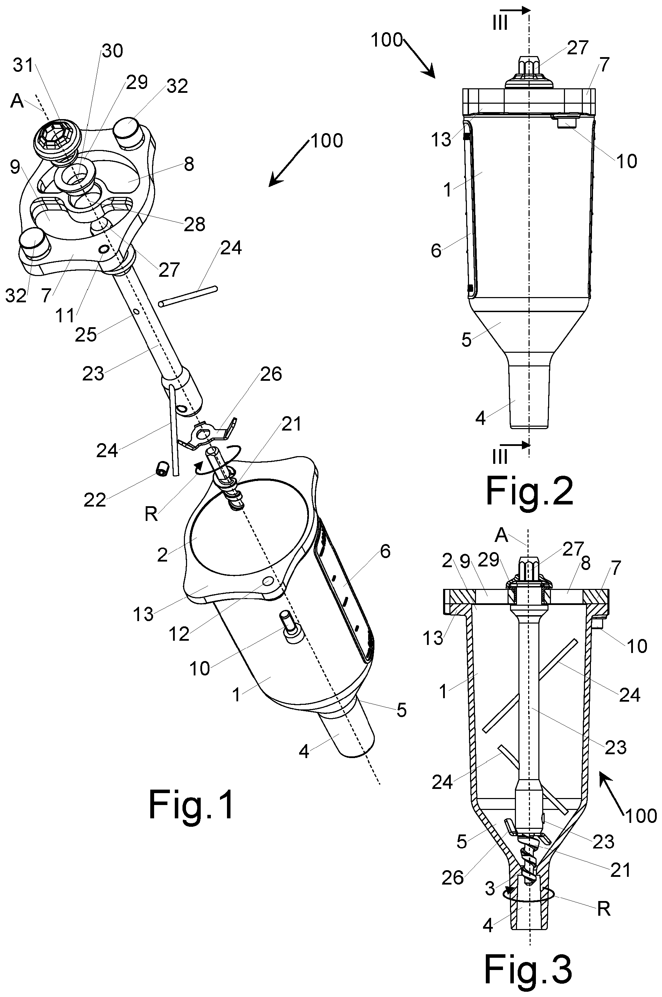

Figures 1-4 show an embodiment of the dispenser 100, which comprises a container 1 which is configured to contain feed and is provided with an inlet opening 2 for loading the feed into the container 1 and with an outlet opening 3 to dispense the feed contained in the container 1. The container 1 can also be provided with an outlet duct 4 arranged downstream of the outlet opening 3 to guide outwards the feed dispensed from the outlet opening 3. The outlet opening 3 is therefore located between the container 1 and the outlet duct 4. A hopper 5 is preferably arranged between the outlet opening 3 and the container 1 to convey the feed from the container 1 to the outlet opening 3. A side surface of the container 1 may comprise a transparent graduated scale 6 to show the quantity of feed contained in the container 1.

The inlet opening 2 of the container 1 can be partially or completely closed by a lid 7. The lid 7 preferably comprises one or more auxiliary openings 8, 9 in communication with the inlet opening 2 for loading the feed into the container 1 through the lid 7 also when the container 1 is closed by the lid 7. The lid 7 can be fixed to the container 1 by means of one or more screws 10 inserted into respective holes 11, 12 obtained in the lid 7 and in a flange 13 which is arranged around the inlet opening 2 of container 1.

Preferably, the hopper 5 has a substantially frustoconical shape and the container 1 has a substantially cylindrical or frustoconical shape. The container 1, the outlet duct 4, the hopper 5 and/or the flange 13 are preferably made of a single piece of molded plastic, in particular transparent polycarbonate.

An auger 21 is arranged at the outlet opening 3 of the container 1 and is mechanically connected to a rotor 23 arranged in the container. The auger 21 is arranged in the outlet opening 3 and/or projects from both sides of this opening. In particular, the rotor 23 comprises a substantially cylindrical shaft having one end keyed to the auger 21 by means of a grub screw 22. The rotor 23 is configured to be mechanically connected to an actuator to transmit a driving torque to the auger 21 and rotate the auger 21 around a rotation axis A, in particular an axis substantially coinciding with the longitudinal axis of the auger 21, in a direction of rotation R, to dispense feed with the auger 21 from the container 1, and preferably also in the direction opposite to the direction of rotation R, to move feed with the auger 21 towards the container 1.

Preferably, the auger 21 is frustoconical and/or with a larger diameter of 10-15 mm and/or with a smaller diameter of 5-10 mm. The outlet opening 3 is substantially cylindrical and/or with a diameter of 5-15 mm. Preferably, the free end of the auger 21 protrudes into the outlet duct 4 and/or the end of the auger 21 connected to the rotor 23 protrudes into the hopper 5. Preferably, the thread of the auger 21 has a substantially square section and/or the pitch of this thread increases towards the free end of the auger 21, i.e. towards the outside.

The rotor 23 may comprise one or more stirrers 24, in particular pins which are inserted into through holes 25 obtained in the rotor 23 and which form an angle of less than 90° with the rotation axis A, in particular an angle of 30°-60°. The rotor 23 may also comprise a propeller 26, in particular arranged adjacent to the auger 21. The propeller 26 comprises one or more blades, in particular three blades, wherein a distal portion of each blade forms with the rotation axis A an angle less than 90°, in particular an angle of 30°-60°. In particular, the propeller 26 is arranged in the hopper 5, wherein preferably distal portions of the blades of the propeller 26 are facing towards the side of the container 1 and are substantially parallel to the adjacent portion of the internal surface of the hopper 5, or are facing towards the side of the auger 21 and are substantially perpendicular to the adjacent portion of the internal surface of the hopper 5. Preferably, the container 1, the outlet duct 4, the hopper 5, the auger 21, the rotor 23 and/or the propeller 26 are mutually arranged in a substantially coaxial manner on the rotation axis A.

An end of the rotor 23 opposite to the end connected to the auger 21 preferably protrudes from the container 1, in particular from the lid 7, and/or comprises a head 27 configured to be coupled mechanically and preferably in a self-centering manner with a joint that can be driven by the actuator, so that the torque generated by the actuator can be transmitted to the auger 21 through this joint, the head 27 and the rotor 23. The head 27 is preferably made in one piece with the rotor 23 and has a polygonal shape with a tapered free end. The lid 7 preferably comprises a hub 28 which houses a portion of the rotor 23 in a rotatable and non-axially sliding manner, in particular by means of a bearing 29 and a retaining ring 30, which are covered by a cover 31 having a substantially frustoconical/frustopyramidal shape. The dispenser 100 comprises reversible coupling means, in particular one or more magnets 32 comprised in the lid 7, which are configured to removably apply the dispenser 100 to a dispenser holder. Alternatively or in addition to the magnets 32, the reversible coupling means can comprise a mechanical rotary coupling, in particular a screw or bayonet coupling, which is configured to be rotated around the rotation axis A to achieve the coupling or decoupling with a dispenser holder.

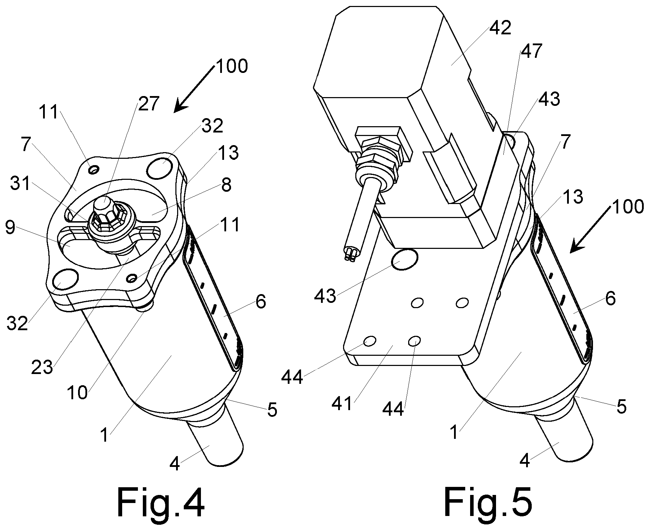

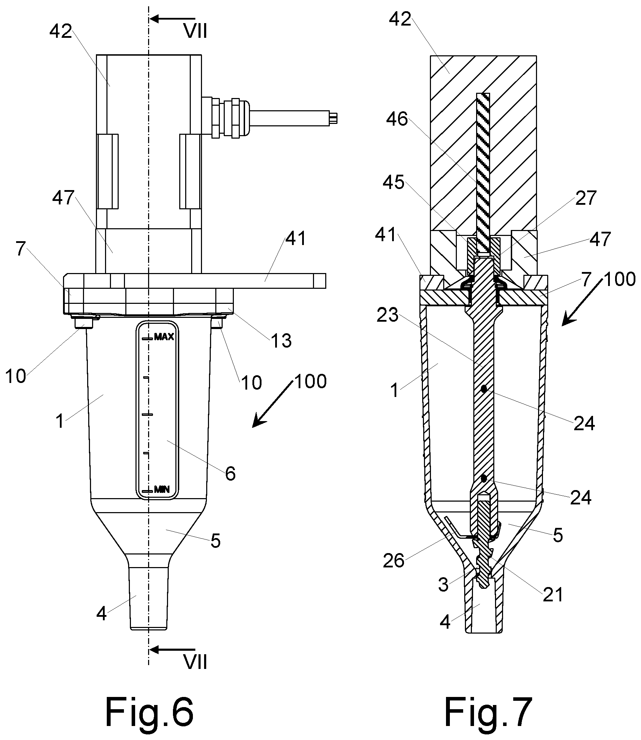

Figures 5-7 show the dispenser 100 of figures 1-4 when it is fixed to a dispenser holder 41, in particular comprising a shaped plate, which supports an actuator 42, so that the dispenser holder 41 is arranged between the actuator 42 and the dispenser 100. Also the dispenser holder 41 comprises reversible coupling means, in particular one or more magnets 43 and/or a rotary coupling, which are configured to cooperate with reversible coupling means of a dispenser, in particular the magnets 32 and/or a rotary coupling of the dispenser 100. For this purpose, the magnets 43 are arranged with reversed polarities to facilitate union with the adjacent magnets 32. Therefore, the dispenser 100 can be applied in a removable manner to the dispenser holder 41 or removed from the dispenser holder 41 by pushing, pulling, rotating and/or tilting the dispenser 100 with respect to the dispenser holder 41 with a manual action of an operator, in particular an action performed with a single hand, preferably a toolless action. The dispenser holder 41 can comprise one or more holes 44 for fixing with screws the dispenser holder 41 to a feeder for dispensing feed. During the coupling of the dispenser 100 with the dispenser holder 41, the head 27 mechanically and automatically couples with a joint 45 which can be rotated by the actuator 42. As shown in the figures, in its operating position, the joint 45 is arranged under the actuator 42, so that the dispenser 100 is arranged under the dispenser holder 41 when the dispenser 100 is mechanically coupled with the dispenser holder 41. The actuator 42 preferably comprises an electric stepper motor configured to rotate in both directions of rotation a drive shaft 46 which is mechanically connected to the joint 45 to in turn rotate in both directions, if desired, a dispensing device, in particular the auger 21 of the dispenser 100 fixed to the dispenser holder 41. The actuator 42 preferably comprises an adapter 47 configured to accommodate the joint 45 and to fix the electric motor to the dispenser holder 41.

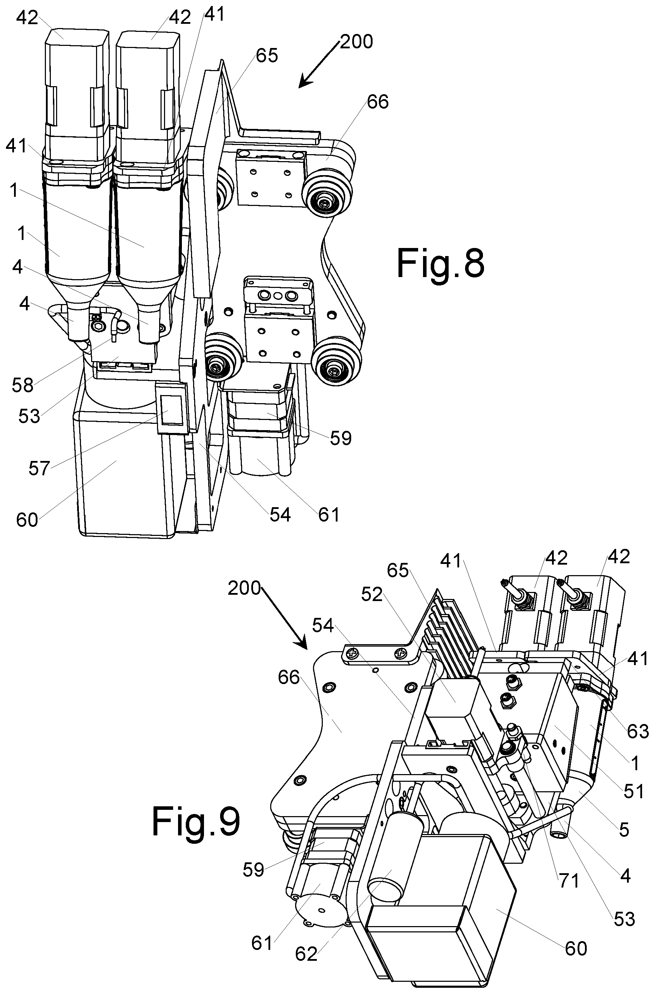

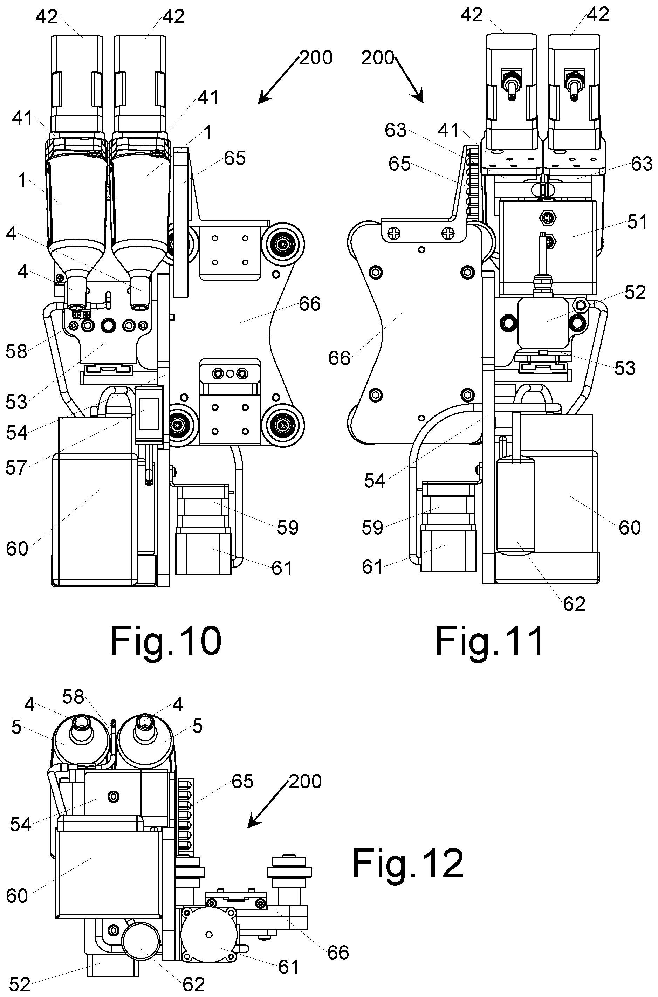

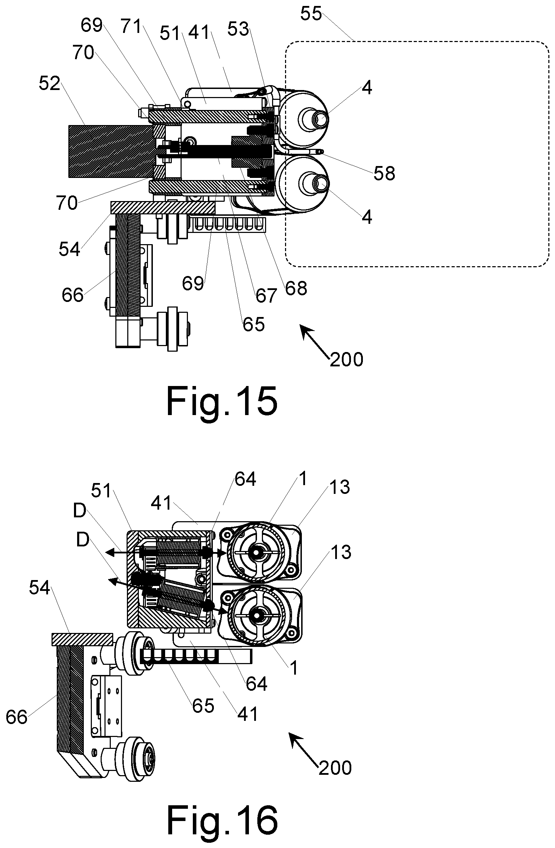

Figures 8-16 show an embodiment of the feeder 200 which can comprise a dispenser, in particular two dispensers 100 according to the embodiment described above, which are arranged with the rotation axes A substantially parallel to each other. The feeder 200 also comprises a dispenser holder, in particular two dispenser holders 41 fixed to a movable support 51 which can be moved by an actuator 52, in particular an electric actuator. For this purpose, the movable support 51 is fixed to a slide 53 configured to be moved by the actuator 52 back and forth with respect to a frame 54 of the feeder 200 in a direction Z from an extended position to a retracted position, and vice versa. Preferably, the movable support 51 can move with respect to the frame 54 only in the direction Z.

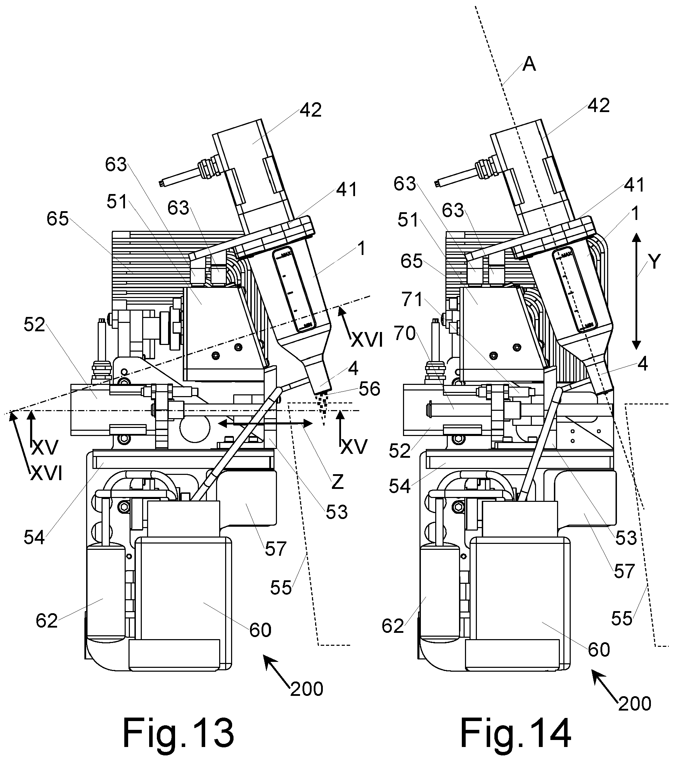

In the extended position of the movable support 51, shown in figure 13, a dispenser fixed to the respective dispenser holder 41 can protrude outwards and onto a container 55 (shown with dotted lines), in particular a cage or tank for laboratory animals, so that feed 56 contained in the dispenser can be dispensed into the container 55 by activating the respective actuator 42, in particular by rotating the auger 21 of the dispenser 100.

In the retracted position of the movable support 51, shown in figure 14, a dispenser fixed to a dispenser holder 41 does not protrude outwards, so the feeder 200 can be moved vertically in the direction Y with respect to the container 55 without interfering with said dispenser.

Each dispenser holder 41 is preferably oriented in the feeder 200 so that the rotation axis A of the dispenser 100 fixed to it is inclined with respect to the Y direction, i.e. to a substantially vertical direction in the position of use of the feeder, with an angle of 10°-25°, in particular 15°-20°, i.e. inclined with respect to the direction Z of the movement of the movable support 51 with an angle of 65°-80°, in particular 70°-75°.

The feeder 200 may also comprise an optical reader 57 which is fixed to the frame 54 under the movable support 51 and is configured to read a label applied to the container 55. The feeder 200 may also comprise a spout 58 which is fixed to the movable support 51 and is connected to a pump 59 which is in turn connected to a tank 60 filled with liquids, for example nutrients for laboratory animals, and can be driven by a motor 61. An aerator 62 may be connected to the tank 60 to aerate the liquids contained in it. The spout 58 is preferably arranged beside an outlet duct of a dispenser, in particular between the outlet ducts 4 of the two dispensers 100.

Each dispenser holder 41 is preferably fixed to the movable support 51 via a load cell 63 to weigh the dispenser 100, in particular the dispensed quantity of feed 56. The movable support 51 preferably comprises one or more electric strikers 64 configured to strike one or several times a dispenser, in particular the container 1 of a dispenser 100, during or after the dispensing of the feed 56 into the container 55, in particular in a direction D substantially perpendicular to the axis of rotation A of the dispenser 100. The feeder 200 may comprise a cable guide 65 fixed to the frame 54 to guide electrical cables (not shown in the figures) of the actuator 52, the optical reader 57, the motor 61 and the electric strikers 64. The feeder 200 may also comprise a cart 66 fixed to the frame 54 to guide the movement of the feeder in the direction Y. The actuator 52 is preferably configured to rotate a screw 67 engaged in a threaded bushing 68 fixed to the slide 53, so that the actuator 52 moves the slide 53 forward or backwards in the direction Z by rotating the screw 67 in one direction or the opposite direction. The slide 53 may comprise one or more pins 69 which are substantially parallel to the direction Z and can slide in perforated guides 70 fixed to the frame 54. A position sensor 71 may be arranged between the actuator 52 and the slide 53 to detect the position of the slide 53 compared to the frame 54.

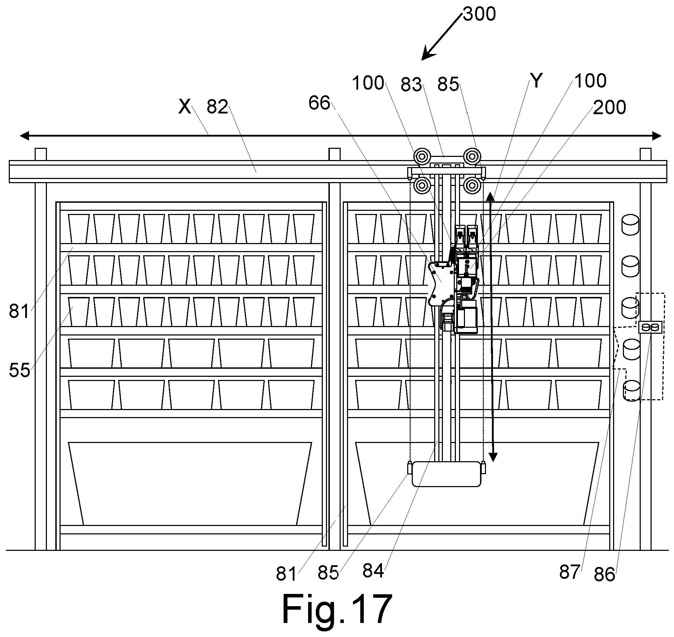

Figure 17 shows an embodiment of the system 300, which can comprise a dispenser, in particular two dispensers 100 according to the present description and/or a feeder, in particular a feeder 200 according to the present description. Furthermore, the system 300 may comprise transport means for moving a feeder 200 in the direction X, i.e. a substantially horizontal direction, and/or in the direction Y, i.e. a substantially vertical direction, so that this feeder can dispense feed, preferably by one or more dispensers 100 according to the present description, in a given animal container of a plurality of animal containers 55 arranged in several rows and/or columns. For this purpose, the containers 55 are arranged on one or more shelves 81. Said transport means may comprise a horizontal rail 82 for a cart 83 which can slide along the direction X, and/or a vertical rail 84 for a cart which can slide along the direction Y, in particular the cart 66 of the feeder 200 according to the present description. The vertical rail 84 may be fixed to the cart 83 to slide along the X direction.

The transport means of the system may comprise one or more proximity sensors 85 configured to stop the movement of the feeder 200 if they detect an obstacle. In particular, the proximity sensors 85 are fixed to the cart 83 and/or to the vertical rail 84 to detect the presence of an obstacle, for example an operator who is picking up a container 55, during the movement of the vertical rail 84 in the direction X.

The system may also comprise a rest station 86 for the feeder 200, which is arranged in a rest position 87 (shown with dashed lines) in the area covered by the movement of the feeder 200 in the direction X and/or in the direction Y. The rest station 86 is provided with one or more elastomeric shutters configured to close by interference the outlet opening 3 (in the absence of the outlet duct 4) or the outlet duct 4 of a dispenser, in particular the dispenser 100 described above, which is coupled with the dispenser holder 41 of the feeder 200. The elastomeric shutters can therefore act as plugs to prevent, for example, the entry of humidity into the container 1, if the dispensers 100 are extended by the feeder 200 at the elastomeric shutters of the rest station 86.

The system may further comprise electromechanical drive means (not shown in the figures) for moving said carts 66, 83, as well as electronic control means for controlling the movement of the carts 66, 83 and devices of the feeder 200, in particular the actuators 42, 52, the motor 59 and/or the electric strikers 64, for example according to analog or digital signals obtained from sensors of the system 300, in particular from the optical reader 57, from the load cells 63 and/or from the position sensor 71 of the feeder 200, as well as from the proximity sensors 85.

Variants or additions can be made by those skilled in the art to the embodiments described and illustrated herein while remaining within the scope of the following claims. In particular, further embodiments may comprise the technical features of one of the following claims with the addition of one or more technical features described in the specification or illustrated in the drawings, taken individually or in any reciprocal combination and comprising their equivalent features.

Furthermore, the terms "a/an/one", "two", etc. in the description and claims respectively mean "at least one", "at least two", etc., unless otherwise specified. Similarly, angles, aspect ratios and values mentioned in the specification and/or shown in the drawings comprise a tolerance of at least 5%, unless otherwise specified.

## Claims

1. A dispenser (100) for dispensing feed (56), which comprises a container (1), which is configured to contain feed and is provided with an inlet opening (2) for loading feed into the container (1) and an outlet opening (3) for dispensing feed contained in the container (1), wherein an auger (21) is arranged at the outlet opening (3) and is mechanically connected to an end of a rotor (23) which is arranged in the container (1) and is configured to be mechanically connected to an actuator (42) to rotate the auger (21) around a rotation axis (A), wherein the rotor (23) comprises a head (27) configured to mechanically connect the rotor (23) to the actuator (42), wherein the end of the rotor (23), which is opposite the end of the rotor (23) connected to the auger (21), protrudes from the container (1) and comprises said head (27), **characterized in that** the dispenser (100) also comprises reversible coupling means, which are configured to removably apply the dispenser (100) to a dispenser holder (41) of a feeder (200) for dispensing feed (56), wherein said actuator (42) is fixed to the dispenser holder (41), wherein said reversible coupling means comprise one or more magnets (32) and/or a mechanical rotary coupling configured to be rotated around the rotation axis (A) of the auger (21) to carry out the coupling or decoupling of the dispenser (100) with the dispenser holder (41).

2. The dispenser (100) according to the previous claim, wherein a hopper (5) is arranged between the outlet opening (3) and the container (1) to convey feed from the container (1) to the outlet opening (3), wherein the rotor (23) comprises a propeller (26) which is arranged in the hopper (5) and comprises one or more blades, wherein distal portions of the blades (26) of the propeller are facing the side of the container (1) and are substantially parallel to the adjacent portion of the internal surface of the hopper (5), or are facing the side of the auger (21) and are substantially perpendicular to the adjacent portion of the internal surface of the hopper (5).

3. The dispenser (100) according to one of the previous claims, wherein the auger (21) is frustoconical and the thread of the auger (21) has a pitch that increases towards the free end of the auger (21).

4. The dispenser (100) according to one of the previous claims, wherein the head (27) of the rotor (23) is configured to be coupled mechanically and in a self-centering manner with a joint (45) which can be operated by the actuator (42) fixed to the dispenser holder (41).

5. The dispenser (100) according to the previous claim, wherein the head (27) of the rotor (23) has a polygonal shape with a tapered free end.

6. The dispenser (100) according to one of the previous claims, wherein said mechanical rotary coupling of said reversible coupling means comprises a screw or bayonet coupling.

7. The dispenser (100) according to one of the previous claims, wherein the inlet opening (2) of the container (1) is partially or completely closed by a lid (7) which comprises one or more magnets (32) and a hub (28) which houses a portion of the rotor (23) in a rotatable and non-axially sliding manner.

8. A feeder (200) for dispensing feed (56), which comprises an actuator (42) comprising a joint (45) which can be rotated by the actuator (42) and is configured to be mechanically connected to and rotate around a rotation axis (A) a head (27) of a rotor (23) of a dispenser (100) for dispensing feed (56), wherein the joint (45) is arranged under the actuator (42), **characterized in that** the feeder (200) also comprises at least one dispenser holder (41), which comprises reversible coupling means configured to cooperate with reversible coupling means of said dispenser (100) to mechanically couple the dispenser holder (41) with the dispenser (100), wherein the dispenser (100) is arranged under the dispenser holder (41) when the dispenser (100) is mechanically coupled with the dispenser holder (41), wherein the reversible coupling means of the dispenser holder (41) comprise one or more magnets (43) and/or a mechanical rotary coupling, which are configured to cooperate with one or more magnets (32) and/or a mechanical rotary coupling, respectively, of the reversible coupling means of the dispenser (100), wherein the mechanical rotary coupling of the dispenser (100) is configured to be rotated around the rotation axis (A) to carry out the coupling or decoupling of the dispenser (100) with the dispenser holder (41).

9. The feeder (200) according to the previous claim, wherein the dispenser holder (41) is mechanically coupled with a dispenser (100) according to one of claims 1 to 7.

10. The feeder (200) according to claim 8 or 9, wherein the actuator (42) comprises an electric stepper motor configured to rotate in both directions of rotation.

11. The feeder (200) according to one of claims 8 to 10, wherein the dispenser holder (41) is mounted on a movable support (51) configured to be moved by an actuator (52) in a direction (Z) with respect to a frame (54) of the feeder (200).

12. The feeder (200) according to the previous claim, wherein the dispenser holder (41) is oriented in the feeder (200) so that the rotation axis (A) of the dispenser (100) is inclined with respect to the direction (Z) of the movement of the movable support (51) with an angle of 65°-80°, in particular 70°-75°.

13. The feeder (200) according to claim 11 or 12, wherein the dispenser holder (41) is fixed to the movable support (51) via a load cell (63) configured to weigh the dispenser (100) coupled with the holder dispenser (41).

14. The feeder (200) according to one of claims 11 to 13, wherein the movable support (51) comprises one or more electric strikers (64) configured to strike the dispenser (100) one or more times.

15. A system (300) for dispensing feed (56) into a container (55) for animals, which system comprises a feeder (200) according to one of claims 8 to 14, as well as transport means (82, 83, 84) for moving the feeder (200) in a substantially horizontal direction (X) and/or in a substantially vertical direction (Y).

16. The system (300) according to the previous claim, wherein the transport means (82, 83, 84) comprise one or more proximity sensors (85) configured to stop the movement of the feeder (200) if they detect an obstacle.

17. The system (300) according to claim 15 or 16, wherein a rest station (86) for the feeder (200) is arranged in a rest position (87) in the area covered by the movement of the feeder (200) in the substantially horizontal direction (X) and/or in the substantially vertical direction (Y) and is provided with one or more elastomeric shutters configured to close by interference the outlet opening (3) or an outlet duct (4) of a dispenser (100) coupled with the dispenser holder (41) of the feeder (200).

## Patentansprüche

1. Spender (100) zur Ausgabe von Futter (56), der einen Behälter (1) umfasst, der dazu ausgelegt ist, Futter zu enthalten, und mit einer Einlassöffnung (2) zum Einfüllen von Futter in den Behälter (1) und einer Auslassöffnung (3) zur Ausgabe von im Behälter (1) enthaltenem Futter versehen ist, wobei eine Förderschnecke (21) an der Auslassöffnung (3) angeordnet ist und mechanisch mit einem Ende eines Rotors (23) verbunden ist, der im Behälter (1) angeordnet ist und dazu ausgelegt ist, mechanisch mit einem Aktuator (42) verbunden zu sein, um die Förderschnecke (21) um eine Drehachse (A) zu drehen, wobei der Rotor (23) einen Kopf (27) umfasst, der dazu ausgelegt ist, den Rotor (23) mechanisch mit dem Aktuator (42) zu verbinden, wobei das Ende des Rotors (23), das dem mit der Förderschnecke (21) verbundenen Ende des Rotors (23) gegenüberliegt, aus dem Behälter (1) hervorsteht und den Kopf (27) umfasst, **dadurch gekennzeichnet, dass** der Spender (100) auch umkehrbare Kopplungsmittel umfasst, die dazu ausgelegt sind, den Spender (100) lösbar an einem Spenderhalter (41) eines Zuführers (200) zur Ausgabe von Futter (56) anzubringen, wobei der Aktuator (42) an dem Spenderhalter (41) befestigt ist, wobei die umkehrbaren Kopplungsmittel einen oder mehrere Magnete (32) und/oder eine mechanische Drehkupplung umfassen, die dazu ausgelegt ist, um die Drehachse (A) der Förderschnecke (21) gedreht zu werden, um das Koppeln oder Entkoppeln des Spenders (100) mit dem Spenderhalter (41) durchzuführen.

2. Spender (100) nach dem vorhergehenden Anspruch, wobei zwischen der Auslassöffnung (3) und dem Behälter (1) ein Trichter (5) angeordnet ist, um Futter von dem Behälter (1) zu der Auslassöffnung (3) zu befördern, wobei der Rotor (23) einen Propeller (26) umfasst, der in dem Trichter (5) angeordnet ist und eine oder mehrere Schaufeln umfasst, wobei distale Abschnitte der Schaufeln (26) des Propellers der Seite des Behälters (1) zugewandt sind und im Wesentlichen parallel zum benachbarten Abschnitt der Innenfläche des Trichters (5) sind oder der Seite der Förderschnecke (21) zugewandt sind und im Wesentlichen senkrecht zum benachbarten Abschnitt der Innenfläche des Trichters (5) sind.

3. Spender (100) nach einem der vorhergehenden Ansprüche, wobei die Förderschnecke (21) kegelstumpfförmig ist und das Gewinde der Förderschnecke (21) eine Steigung aufweist, die zum freien Ende der Förderschnecke (21) hin zunimmt.

4. Spender (100) nach einem der vorhergehenden Ansprüche, wobei der Kopf (27) des Rotors (23) dazu ausgelegt ist, mechanisch und selbstzentrierend mit einem Gelenk (45) gekoppelt zu werden, das durch den am Spenderhalter (41) befestigten Aktuator (42) betätigt werden kann.

5. Spender (100) nach dem vorhergehenden Anspruch, wobei der Kopf (27) des Rotors (23) eine polygonale Form mit einem sich verjüngenden freien Ende aufweist.

6. Spender (100) nach einem der vorhergehenden Ansprüche, wobei die mechanische Drehkupplung der umkehrbaren Kopplungsmittel eine Schrauben- oder Bajonettkupplung umfasst.

7. Spender (100) nach einem der vorhergehenden Ansprüche, wobei die Einlassöffnung (2) des Behälters (1) teilweise oder vollständig durch einen Deckel (7) verschlossen ist, der einen oder mehrere Magnete (32) und eine Nabe (28) umfasst, die einen Abschnitt des Rotors (23) drehbar und nicht axial verschiebbar aufnimmt.

8. Zuführer (200) zur Ausgabe von Futter (56), der einen Aktuator (42) umfasst, der ein Gelenk (45) umfasst, das durch den Aktuator (42) gedreht werden kann und dazu ausgelegt ist, mechanisch mit einem Kopf (27) eines Rotors (23) eines Spenders (100) zur Ausgabe von Futter (56) verbunden zu sein und diesen um eine Drehachse (A) zu drehen, wobei das Gelenk (45) unterhalb des Aktuators (42) angeordnet ist, **dadurch gekennzeichnet, dass** der Zuführer (200) außerdem mindestens einen Spenderhalter (41) umfasst, der umkehrbare Kopplungsmittel umfasst, die dazu ausgelegt sind, mit umkehrbaren Kopplungsmitteln des Spenders (100) zusammenzuwirken, um den Spenderhalter (41) mechanisch mit dem Spender (100) zu koppeln, wobei der Spender (100) unterhalb des Spenderhalters (41) angeordnet ist, wenn der Spender (100) mechanisch mit dem Spenderhalter (41) gekoppelt ist, wobei die umkehrbaren Kopplungsmittel des Spenderhalters (41) einen oder mehrere Magnete (43) und/oder eine mechanische Drehkupplung umfassen, die dazu ausgelegt sind, mit einem oder mehreren Magneten (32) bzw. einer mechanischen Drehkupplung der reversiblen Kopplungsmittel des Spenders (100) zusammenzuwirken, wobei die mechanische Drehkupplung des Spenders (100) dazu ausgelegt ist, um die Drehachse (A) gedreht zu werden, um die Kopplung oder Entkopplung des Spenders (100) mit dem Spenderhalter (41) durchzuführen.

9. Zuführer (200) nach dem vorhergehenden Anspruch, wobei der Spenderhalter (41) mechanisch mit einem Spender (100) nach einem der Ansprüche 1 bis 7 gekoppelt ist.

10. Zuführer (200) nach Anspruch 8 oder 9, wobei der Aktuator (42) einen elektrischen Schrittmotor umfasst, der dazu ausgelegt ist, sich in beide Drehrichtungen zu drehen.

11. Zuführer (200) nach einem der Ansprüche 8 bis 10, wobei der Spenderhalter (41) auf einem beweglichen Träger (51) angebracht ist, der dazu ausgelegt ist, durch einen Aktuator (52) in einer Richtung (Z) in Bezug auf einen Rahmen (54) des Zuführers (200) bewegt zu werden.

12. Zuführer (200) nach dem vorhergehenden Anspruch, wobei der Spenderhalter (41) in dem Zuführer (200) so ausgerichtet ist, dass die Drehachse (A) des Spenders (100) in Bezug auf die Richtung (Z) der Bewegung des beweglichen Trägers (51) in einem Winkel von 65°-80°, insbesondere 70°-75°, geneigt ist.

13. Zuführer (200) nach Anspruch 11 oder 12, wobei der Spenderhalter (41) an dem beweglichen Träger (51) über eine Wägezelle (63) befestigt ist, die dazu ausgelegt ist, den mit dem Spenderhalter (41) gekoppelten Spender (100) zu wiegen.

14. Zuführer (200) nach einem der Ansprüche 11 bis 13, wobei der bewegliche Träger (51) einen oder mehrere elektrische Schlagbolzen (64) umfasst, die dazu ausgelegt sind, den Spender (100) ein- oder mehrmals zu stoßen.

15. System (300) zur Ausgabe von Futter (56) in einen Behälter (55) für Tiere, wobei das System einen Zuführer (200) nach einem der Ansprüche 8 bis 14 sowie Transportmittel (82, 83, 84) zum Bewegen des Zuführers (200) in einer im Wesentlichen horizontalen Richtung (X) und/oder in einer im Wesentlichen vertikalen Richtung (Y) umfasst.

16. System (300) nach dem vorhergehenden Anspruch, wobei die Transportmittel (82, 83, 84) einen oder mehrere Näherungssensoren (85) umfassen, die dazu ausgelegt sind, die Bewegung des Zuführers (200) zu stoppen, wenn sie ein Hindernis erkennen.

17. System (300) nach Anspruch 15 oder 16, wobei eine Ruhestation (86) für den Zuführer (200) in einem Ruhebereich (87) in dem von der Bewegung des Zuführers (200) in der im Wesentlichen horizontalen Richtung (X) und/oder in der im Wesentlichen vertikalen Richtung (Y) abgedeckten Bereich angeordnet ist und mit einem oder mehreren elastomeren Verschlüssen versehen ist, die dazu ausgelegt sind, die Auslassöffnung (3) oder einen Auslasskanal (4) eines mit dem Spenderhalter (41) des Zuführers (200) gekoppelten Spenders (100) durch Eingriff zu verschließen.

## Revendications

1. Distributeur (100) pour distribuer de la nourriture (56), lequel comprend un récipient (1), qui est configuré pour contenir de la nourriture et est muni d'une ouverture d'entrée (2) pour charger la nourriture dans le récipient (1) et d'une ouverture de sortie (3) pour distribuer la nourriture contenue dans le récipient (1), dans lequel une tarière (21) est disposée au niveau de l'ouverture de sortie (3) et est reliée mécaniquement à une extrémité d'un rotor (23) qui est disposé dans le récipient (1) et est configuré pour être relié mécaniquement à un actionneur (42) pour faire tourner la tarière (21) autour d'un axe de rotation (A), dans lequel le rotor (23) comprend une tête (27) configurée pour relier mécaniquement le rotor (23) à l'actionneur (42), dans lequel l'extrémité du rotor (23), qui est opposée à l'extrémité du rotor (23) reliée à la tarière (21), fait saillie du récipient (1) et comprend ladite tête (27), **caractérisé en ce que** le distributeur (100) comprend également des moyens de couplage réversibles, qui sont configurés pour appliquer de manière amovible le distributeur (100) à un support de distributeur (41) d'un dispositif d'alimentation (200) pour distribuer de la nourriture (56), dans lequel ledit actionneur (42) est fixé au support de distributeur (41), dans lequel lesdits moyens de couplage réversible comprennent un ou plusieurs aimants (32) et/ou un couplage rotatif mécanique configuré pour tourner autour de l'axe de rotation (A) de la tarière (21) pour effectuer le couplage ou le découplage du distributeur (100) avec le support de distributeur (41).

2. Distributeur (100) selon la revendication précédente, dans lequel une trémie (5) est disposée entre l'ouverture de sortie (3) et le récipient (1) pour transporter la nourriture du récipient (1) à l'ouverture de sortie (3), dans lequel le rotor (23) comprend une hélice (26) qui est disposée dans la trémie (5) et comprend une ou plusieurs pales, dans lequel les portions distales des pales (26) de l'hélice sont tournées vers le côté du récipient (1) et sont sensiblement parallèles à la portion adjacente de la surface interne de la trémie (5), ou sont tournées vers le côté de la tarière (21) et sont sensiblement perpendiculaires à la portion adjacente de la surface interne de la trémie (5).

3. Distributeur (100) selon l'une des revendications précédentes, dans lequel la tarière (21) est tronconique et le filetage de la tarière(21) a un pas qui augmente vers l'extrémité libre de la tarière (21).

4. Distributeur (100) selon l'une des revendications précédentes, dans lequel la tête (27) du rotor (23) est configurée pour être couplée mécaniquement et de manière autocentrée à un joint (45) qui peut être actionné par l'actionneur (42) fixé au support de distributeur (41).

5. Distributeur (100) selon la revendication précédente, dans lequel la tête (27) du rotor (23) a une forme polygonale avec une extrémité libre effilée.

6. Distributeur (100) selon l'une des revendications précédentes, dans lequel ledit couplage rotatif mécanique desdits moyens de couplage réversible comprend un couplage à vis ou à baïonnette.

7. Distributeur (100) selon l'une des revendications précédentes, dans lequel l'ouverture d'entrée (2) du récipient (1) est partiellement ou complètement fermée par un couvercle (7) qui comprend un ou plusieurs aimants (32) et un moyeu (28) qui loge une portion du rotor (23) de manière rotative et coulissante non axiale.

8. Dispositif d'alimentation (200) pour distribuer la nourriture (56), qui comprend un actionneur (42) comprenant un joint (45) qui peut être mis en rotation par l'actionneur (42) et est configuré pour être relié mécaniquement à, et tourner autour d'un axe de rotation (A) d'une tête (27) d'un rotor (23) d'un distributeur (100) pour distribuer la nourriture (56), dans lequel le joint (45) est disposé sous l'actionneur (42), **caractérisé en ce que** le dispositif d'alimentation (200) comprend également au moins un support de distributeur (41), qui comprend des moyens de couplage réversible configurés pour coopérer avec des moyens de couplage réversible dudit distributeur (100) pour coupler mécaniquement le support de distributeur (41) au distributeur (100), dans lequel le distributeur (100) est disposé sous le support de distributeur (41) lorsque le distributeur (100) est couplé mécaniquement au support de distributeur (41), dans lequel les moyens de couplage réversible du support de distributeur (41) comprennent un ou plusieurs aimants (43) et/ou un couplage rotatif mécanique, qui sont configurés pour coopérer avec un ou plusieurs aimants (32) et/ou un couplage rotatif mécanique, respectivement, des moyens de couplage réversible du distributeur (100), dans lequel le couplage rotatif mécanique du distributeur (100) est configuré pour tourner autour de l'axe de rotation (A) pour effectuer le couplage ou le découplage du distributeur (100) avec le support de distributeur (41).

9. Dispositif d'alimentation (200) selon la revendication précédente, dans lequel le support de distributeur (41) est couplé mécaniquement à un distributeur (100) selon l'une des revendications 1 à 7.

10. Dispositif d'alimentation (200) selon la revendication 8 ou 9, dans lequel l'actionneur (42) comprend un moteur pas à pas électrique configuré pour tourner dans les deux sens de rotation.

11. Dispositif d'alimentation (200) selon l'une des revendications 8 à 10, dans lequel le support de distributeur (41) est monté sur un support mobile (51) configuré pour être déplacé par un actionneur (52) dans une direction (Z) par rapport à un cadre (54) du dispositif d'alimentation (200).

12. Dispositif d'alimentation (200) selon la revendication précédente, dans lequel le support de distributeur (41) est orienté dans le dispositif d'alimentation (200) de sorte que l'axe de rotation (A) du distributeur (100) est incliné par rapport à la direction (Z) du mouvement du support mobile (51) avec un angle de 65° à 80°, en particulier de 70° à 75°.

13. Dispositif d'alimentation (200) selon la revendication 11 ou 12, dans lequel le support de distributeur (41) est fixé au support mobile (51) via une cellule de charge (63) configurée pour peser le distributeur (100) couplé au distributeur de support (41).

14. Dispositif d'alimentation (200) selon l'une des revendications 11 à 13, dans lequel le support mobile (51) comprend un ou plusieurs percuteurs électriques (64) configurés pour frapper le distributeur (100) une ou plusieurs fois.

15. Système (300) pour distribuer de la nourriture (56) dans un récipient (55) pour animaux, lequel système comprend un dispositif d'alimentation (200) selon l'une des revendications 8 à 14, ainsi que des moyens de transport (82, 83, 84) pour déplacer le dispositif d'alimentation (200) dans une direction sensiblement horizontale (X) et/ou dans une direction sensiblement verticale (Y).

16. Système (300) selon la revendication précédente, dans lequel les moyens de transport (82, 83, 84) comprennent un ou plusieurs capteurs de proximité (85) configurés pour arrêter le mouvement du dispositif d'alimentation (200) s'ils détectent un obstacle.

17. Système (300) selon la revendication 15 ou 16, dans lequel un poste de repos (86) pour le dispositif d'alimentation (200) est disposé dans une position de repos (87) dans la zone couverte par le mouvement du dispositif d'alimentation (200) dans la direction sensiblement horizontale (X) et/ou dans la direction sensiblement verticale (Y) et est pourvu d'un ou plusieurs volets élastomères configurés pour fermer par interférence l'ouverture de sortie (3) ou un conduit de sortie (4) d'un distributeur (100) couplé au support de distributeur (41) du dispositif d'alimentation (200).
